# EUROPEAN PATENT SPECIFICATION

(11) **EP 3 760 024 B1**
(45) Date of publication and mention of the grant of the patent: **29.09.2021**
(21) Application number: 20182707.8
(22) Date of filing: 26.06.2020
(51) Int. Cl.: A01D 34/86, A01G 3/04

(54) **ROTARY DISC MOWER WITH A SIDE MOWING BAR**
ROTATIONSMÄHER MIT SEITLICHEM MÄHWERK
TONDEUSE À DISQUE ROTATIVE AVEC BARRE DE FAUCHE LATÉRALE

(30) Priority: 01.07.2019 IT 201900010548
(43) Date of publication of application: 06.01.2021
(73) Proprietor: BCS S.p.A., 20123 Milano (MI) (IT)
(72) Inventor: GILARDI, Roberto, 20094 CORSICO (IT); OMODEO VANONE, Fabrizio, 27026 MORTARA (IT); FORNASIERO, Emilio, 27036 MORTARA (IT)
(74) Representative: Franco Martegani S.r.l.

(56) References cited:
- EP-A1- 1 060 650
- EP-A1- 2 225 933
- EP-B1- 3 262 916
- WO-A1-2014/009652

## Description

The present invention relates to a rotary disc mower with a side mowing bar.

In the field of agricultural work, it is known that, during grass-cutting work, a rotary disc mower applied laterally to a tractor or machine, used for cutting grass, must have a low pressure on the ground so as to avoid damaging the turf or polluting the forage cut by it with soil.

In order to achieve this, mowers of this type are equipped with special lightening elements of the mowing bar such as springs, hydraulic cylinders, etc. The arrangement of these lightening elements has the specific function of discharging a part of the weight of the mowing bar on the tractor so as to reduce its weight on the ground.

This type of lightening, which for the sake of simplicity can be defined as "static", can generally be regulated by the operator according to the type of terrain and the expected working speed.

It is true, however, that the weight of the mowing bar which weighs on the ground must not be excessively reduced, as the mowing bar must follow the irregular and completely unexpected profile of the ground on which it is operating.

If the mowing bar is too light, it may happen that, on encountering a small bump, instead of faithfully following the contour of the ground, it tends to "take off", therefore interrupting the cutting of the grass for a certain stretch, a drawback that significantly increases with an increase in the mowing speed.

A good mowing bar must therefore be as light as possible, but without ever leaving the ground. These two important features are contrasting in the sense that:
- the lighter the bar, the less it will damage the turf;
- the lighter the bar, the more it tends to take off.

A compromise is normally sought, that is not easy to achieve with satisfactory results.

EP3262916B1 of the same applicant has found a solution that meets the above-mentioned requirements in an extremely effective manner.

Dissatisfied with the solution found, the applicant naturally tried to discover whether it was possible to further improve the performance achieved with the above solution, especially in view of the shortcomings of the rotary disc mowers known before the above-mentioned solution.

The general objective of the present invention is to provide a rotary disc mower with a side mowing bar capable of solving the above-mentioned drawbacks of the prior art before EP3262916B1 in an extremely simple, economic and particularly functional way.

A further objective of the present invention is to provide a rotary disc mower with a side mowing bar capable of further strengthening the mowing bar, rationalizing the construction and functioning scheme as much as possible.

Another objective of the present invention is to provide a rotary disc mower with a side mowing bar which eliminates any possible functioning criticality by simplifying the mechanism and connections between the parts.

The above objectives are achieved by a rotary disc mower according to independent claim 1 and the following subordinate claims.

The structural and functional characteristics of the present invention and its advantages with respect to the known art will appear even more evident from the following description, referring to the attached schematic drawings, which show an embodiment example of the invention itself.

In the drawings:
- figure 1 is a raised view from the rear of the mower with a side mowing bar according to the invention;
- figure 2 is a plan view of the mower as shown in figure 1;

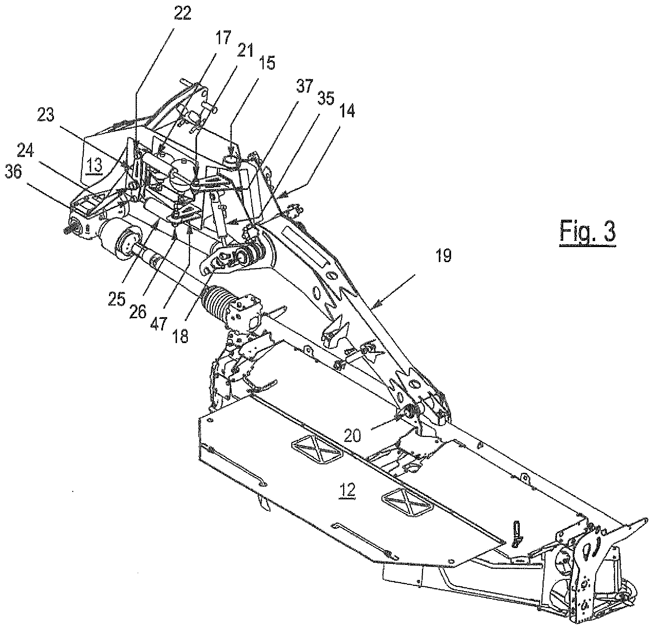

- figure 3 is a perspective view of the rotary disc mower with a side mowing bar as shown in figures 1 and 2;
- figures 4 and 5 are raised side views similar to that shown in figure 1 with the mowing bar in two headland and transporting positions;
- figures 6 and 7 are raised side views, from opposite observation points, of the enlarged central area as shown in the mower of figure 1.

It is known that a rotary disc mower, indicated with 10, is carried laterally by a tractor or machine (not shown) and comprises a rotary disc mowing bar 12 supported by a fixed frame 13 and a mobile frame 14.

This kind of mower 10 is constrained behind the tractor to which it is attached by means of its fixed frame 13. As can be seen from the figures, this fixed frame 13 is in turn constrained to the movable frame 14 around a rotation pin 15.

A release rod 17 is arranged between the fixed frame 13 and the movable frame 14 which normally acts as a tie rod. In the example, the release rod 17 provides a hydraulic cylinder with a preloaded hydropneumatic accumulator, but it may also consist of a mechanical system.

Said release rod 17 also exerts the function of intervening when the pre-established resistance values of the mowing bar 12 are exceeded. The release rod, in fact, intervenes when the mowing bar 12 encounters various kinds of obstacles which could lead to damage to the mower 10. In this case, the release rod 17, suitably calibrated to a predetermined resistance value, collapses and/or is shortened allowing the withdrawal of the mowing bar 12 and sometimes its partial lifting so as to overcome the obstacle without damage, avoiding breakages.

A supporting arm 19 is constrained to the movable frame 14 by a pin 18, which in turn, by means of a further pin 20, arranged at one of its ends, carries the mowing bar 12 itself. The pin 18 forms the rotation axis between the movable frame 14 and the supporting arm 19 and the pin 20 forms the tilting axis between the supporting arm 19 and the mowing bar 12.

One end of the release rod 17 is articulated through a pin 21 to an extension or bracket 37 of the movable frame 14, whereas the opposite end is constrained by means of a pin 22 to a first end of a rocker arm 23. The rocker arm 23 is constrained by a pin 24 in its intermediate area to the fixed frame 13 and at its other opposite end through a pin 36 to a rod of a hydraulic cylinder 25. The body of the hydraulic cylinder 25 on the other hand is constrained at one of its ends through a pin 26 to an extension or bracket 47 of the fixed frame 13.

This arrangement affirms that the first cylinder 25 is arranged between the fixed frame 13 and the release rod 17. In this way the movement of the hydraulic cylinder 25 is rigidly connected to the release rod 17.

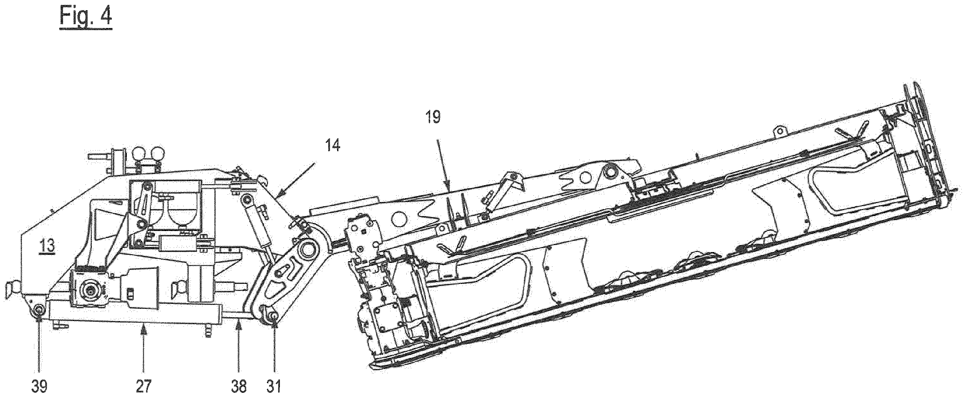

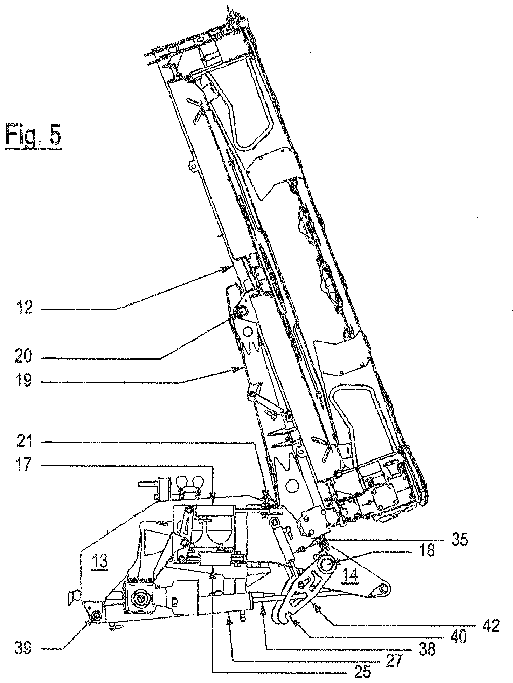

Furthermore, the supporting arm 19 is connected in an extension thereof 19b by means of a pin 31 to a stem 38 of a lifting cylinder 27 which is articulated at its other end through a pin 39 to the fixed frame 13. The lifting cylinder 27 allows the mowing bar 12 to be lifted, by rotating the supporting arm 19, in the headland position (figure 4) and transporting position completely raised and rotated (figure 5).

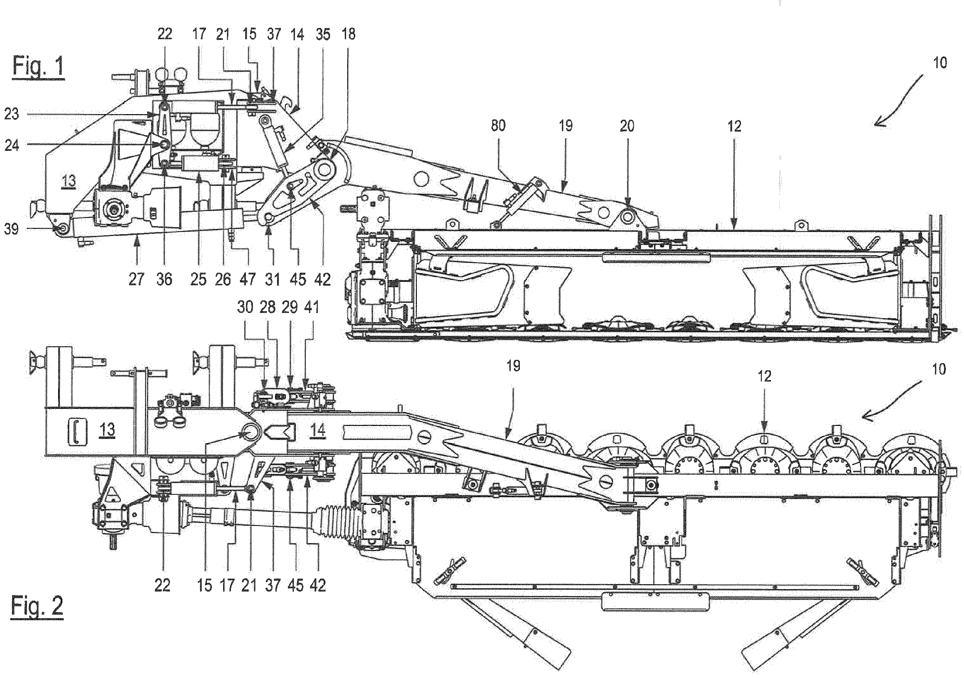

It should also be noted that in both of these positions an additional cylinder 80 is provided which blocks the supporting arm 19 and the mowing bar 12 which blocks the oscillation between the same, avoiding shaking and possible totally unnecessary impact. This type of cylinder 80 is naturally deactivated and functionless when the mowing bar 12 is operating on the ground as shown for example in figure 1.

According to the present invention, in a mower 10 a further advantageous new arrangement of parts and connections has been provided which solves the problems of the known prior art in a different way with respect to what is the subject of patent EP3262916B1 of the same applicant.

In the present invention, in fact, it should be pointed out that the mowing bar 12 is lightened by the combination of two different arrangements.

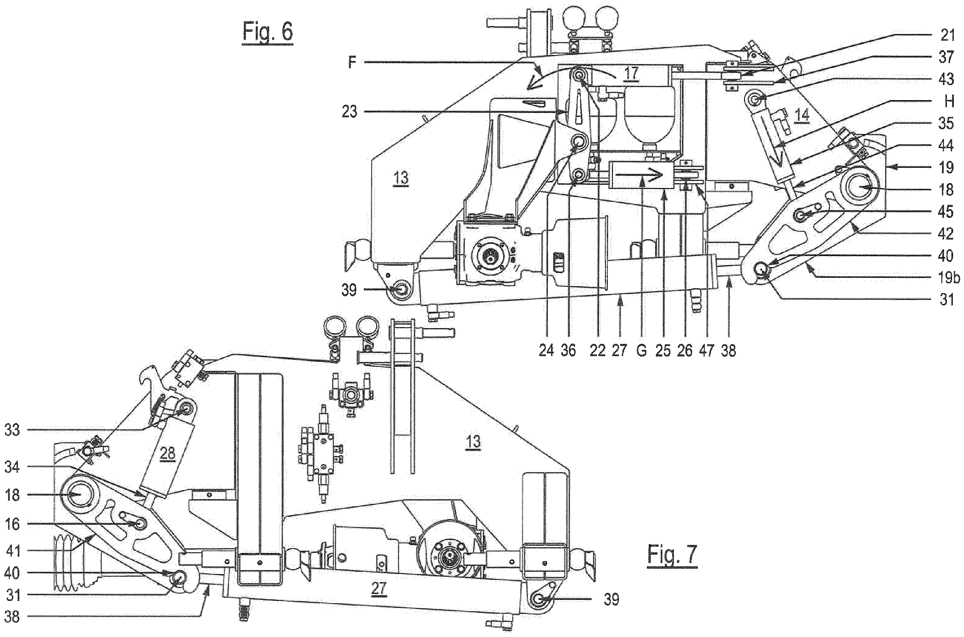

A first type of lightening is a lightening which can be defined as static, as a cylinder 28 is provided, more clearly visible in figure 7. The cylinder 28 is connected to the movable frame 14 via a pin 33 by means of a hydraulic circuit with a preloaded hydropneumatic accumulator, whereas at the other end, one of its stems 34 is connected by means of a pin 16 to a fork 41 or rod rotating around the pin 18. Said fork 41 houses, in a recessed seat 40, the end pin 31 of the lifting cylinder 27 of the mowing bar 12.

It can be understood that this cylinder 28 exerts a lightening function based on the preload selected on the mower.

A second type of lightening is a lightening that can be defined as dynamic in view of the type of intervention that it must exert in the mower. It should be noted that in this second arrangement, a cylinder 35 is provided, positioned symmetrically to the previous cylinder 28 with respect to the movable frame 14, clearly visible in figure 6. The cylinder 35 is in fact connected to the movable frame 14 via a pin 43 whereas at the other end, one of its stems 44 is connected by means of a pin 45 to a fork 42 or rod rotating around the pin 18, similar to the fork 41.

This dynamic lightening is arranged and functions as follows.

The friction present on the mowing bar 12 during the operational mowing phase is transformed into a lightening force by means of the above-mentioned arrangement.

As already mentioned, the above-mentioned release rod 17, calibrated in a predetermined manner, acts on the rocker arm 23.

The release rod 17, through the rocker arm 23, compresses the oil in the cylinder 25 which, as it is connected with a pipe (not shown), creates pressure in the subsequent cylinder 35.

In this way it should be noted that the first and second hydraulic cylinders 25, 35 are hydraulically connected and are actuated by the release rod 17.

In the example, clearly visible in figure 6, the oscillation of the rocker arm 23 according to the arrow F promotes the return of the stem of the cylinder 25 according to the arrow G and, through the connecting pipe, the exiting of the stem of the cylinder 35 according to the arrow H. The fork 42 is consequently caused to rotate, also forcing the extension 19b of the supporting arm 19 to rotate and a lightening lifting of the mowing bar 12 is obtained.

This dynamic lightening is added to the above-mentioned static lightening imparted by the cylinder 28, as explained above.

Both types of lightening act between the movable frame 14 and the supporting arm 19 through the forks 41 and 42 that follow the movement of the mowing bar 12 in the operating area, and then abandon it when it is recalled in the headland or transporting positions previously described.

As already mentioned and described, the mowing bar 12, when operating, encounters resistance to advancement, mainly due to the bar/ground frictions which are significantly proportional to the weight of the mowing bar itself on the ground. According to the present invention, this resistant force has been seen to be used for producing a "dynamic" lightening force which is significantly added to the conventional lightening called "static" always present on the mowing bar.

It has been previously seen and indicated that the mower of the present invention exploits the release rod 17 which is normally present on this type of bar and which is used here when operating as an actual tie rod that actuates the rocker arm 23. This in turn controls the hydraulic cylinder 25.

In this way, the longitudinal forces acting on the mowing bar are transformed into oil pressure in the first cylinder 25. This is hydraulically connected with the second cylinder 35. The dimensions of the chambers and rods of the two cylinders 25 and 35 are suitably calculated to obtain the necessary amplification of forces. This allows, during the development or design of the mower, the friction force/lightening force ratio to be varied. The pressure present on the second cylinder 35 thus tends to move the pin 31 and therefore also the lifting arm 19.

The lifting cylinder 27, in conditions of the mower in a cutting position, is kept floating allowing the perfect adaptation of the mowing bar to the ground.

The result is to have a lighter mowing bar but with a better adaptation of the bar to the ground. On encountering a small bump of the ground, in fact, the mowing bar "feels" the increased resistance and the arrangement of the invention transforms it into additional lightening which helps the sliding and overcoming of the obstacle. When, on the other hand, the bar tends to become detached from the ground, the friction resistance is cancelled and the additional lightening is also automatically cancelled, allowing the mowing bar to rapidly return to being in contact with the ground.

This dynamic lightening action is added independently and automatically to the classical and usual lightening action produced by the nitrogen-charged cylinder 28 which produces the so-called "static" lightening regulated "*una tantum*" by the operator.

It has therefore been shown that according to the present invention the drawbacks of the prior art have been eliminated in a mower by associating a dynamic lightening force with a static lightening force always present on a mowing bar of a rotary disc mower carried by a tractor or similar agricultural machine.

The objective mentioned in the preamble of the description has thus been achieved.

The protection scope of the present invention is defined by the enclosed claims.

## Claims

1. A rotary disc mower (10) with a side mowing bar (12) comprising:
- a fixed frame (13),
- a movable frame (14) and
- a lightening device of the mowing bar (12),
wherein said mowing bar (12) is positioned on a supporting arm (19) articulated in a pin (18) with respect to the movable frame (14),
wherein a lightening cylinder (28) is positioned between said supporting arm (19) and said movable frame (14), which keeps said supporting arm (19) of said mowing bar (12) lightened,
said cylinder (28) being loaded according to a predetermined force,
a release rod (17) also being positioned between said fixed frame (13) and said movable frame (14) carrying said mowing bar (12), and respectively a lifting cylinder (27) between said fixed frame (13) and said supporting arm (19),
wherein a first hydraulic cylinder (25) is also provided, positioned between said fixed frame (13) and said release rod (17),
and
a second hydraulic cylinder (35), positioned between said movable frame (14) and said supporting arm (19) of said mowing bar (12), wherein said first and second hydraulic cylinders (25,35) are hydraulically connected and actuated by said release rod (17) which intervenes in the presence of a resistant force on the mowing bar,
wherein said lifting cylinder (27) is constrained at a first end to a pin (31), passing through the supporting arm (19), and at the other opposite end to a pin (39) rotatingly positioned with respect to said fixed frame (13),
**characterized in that** at least one fork (42) rotatable around said pin (18) is also provided, which engages said pin (31) of said lifting cylinder (27) connected via a pin (45) to a stem (44) of said second hydraulic cylinder (35), positioned between said movable frame (14) and said supporting arm (19).

2. The mower (10) according to claim 1, **characterized in that** said first and second cylinders (25,35) are actuated by resistant forces that oppose the advancement of the mowing bar (12) and are cancelled as soon as the mowing bar (12) tends to lift from the ground when these resistant forces fail.

3. The mower (10) according to claim 1 or 2, **characterized in that** said pin (45) is arranged at one end of said second hydraulic cylinder (35) which, at its other end, is constrained to said movable frame (14).

4. The mower (10) according to one or more of the previous claims from 1 to 3, **characterized in that** said movable frame (14) is constrained through a rotation pin (15) to said fixed frame (13), constrained in turn to the rear of said tractor.

5. The mower (10) according to one or more of the previous claims from 1 to 4, **characterized in that** said lightening cylinder (28) is connected at one end to the movable frame (14) by means of a pin (33) whereas at the other end, a stem (34) is connected by means of a pin (16) to a further fork (41) rotating around the pin (18), wherein said further fork (41) houses, in one of its recessed seats (40), the pin (31) at the end of the lifting cylinder (27) of the mowing bar (12).

6. The mower (10) according to one or more of the previous claims from 1 to 5, **characterized in that** said release rod (17) is connected to said fixed frame (13) with the interpositioning of said first hydraulic cylinder (25).

7. The mower (10) according to one or more of the previous claims from 1 to 6, **characterized in that** one end of said release rod (17) is connected to a rocker arm (23) which, in one of its intermediate areas, is constrained by a pin (24) to the fixed frame (13) and at its other opposite end by a pin (36) to said first hydraulic cylinder (25).

## Patentansprüche

1. Kreiselmähwerk (10) mit einem seitlichen Mähbalken (12), umfassend:
- einen festen Rahmen (13),
- einen beweglichen Rahmen (14) und
- eine Entlastungsvorrichtung des Mähbalkens (12),
wobei dieser Mähbalken (12) auf einem Stützarm (19) positioniert ist, der in Bezug auf den beweglichen Rahmen (14) in einem Zapfen (18) angelenkt ist,
wobei ein Entlastungszylinder (28) zwischen diesem Stützarm (19) und dem besagten beweglichen Rahmen (14) positioniert ist, welcher den besagten Stützarm (19) dieses Mähbalkens (12) entlastet hält,
wobei der besagte Zylinder (28) entsprechend einer vorbestimmten Kraft belastet ist,
wobei auch eine Auslösestange (17) zwischen diesem festen Rahmen (13) und diesem beweglichen Rahmen (14), der den Mähbalken (12) trägt, positioniert ist, bzw. ein Hubzylinder (27) zwischen diesem festen Rahmen (13) und diesem Stützarm (19),
wobei auch ein erster Hydraulikzylinder (25) vorgesehen ist, der zwischen dem besagten festen Rahmen (13) und dieser Auslösestange (17) positioniert ist,
und
einen zweiten Hydraulikzylinder (35), der zwischen dem beweglichen Rahmen (14) und dem Stützarm (19) des Mähbalkens (12) positioniert ist, wobei der erste und der zweite Hydraulikzylinder (25, 35) hydraulisch verbunden sind und durch die besagte Auslösestange (17) betätigt werden, welche bei Vorhandensein einer Widerstandskraft auf den Mähbalken interveniert,
wobei der besagte Hubzylinder (27) an einem ersten Ende an einem Zapfen (31), der durch den Stützarm (19) hindurchgeht, und an dem anderen, gegenüberliegenden Ende an einem Zapfen (39), der in Bezug auf den festen Rahmen (13) drehbar positioniert ist, gehalten ist,
**dadurch gekennzeichnet, dass** auch mindestens eine um den besagten Zapfen (18) drehbare Gabel (42) vorgesehen ist, welche mit dem Zapfen (31) des besagten Hubzylinders (27) in Eingriff steht, der über einen Zapfen (45) mit einem Schaft (44) des besagten zweiten Hydraulikzylinders (35) verbunden ist, der zwischen dem beweglichen Rahmen (14) und dem Stützarm (19) positioniert ist.

2. Mähwerk (10) nach Anspruch 1, **dadurch gekennzeichnet, dass** der erste und der zweite Zylinder (25, 35) durch Widerstandskräfte betätigt sind, die dem Aufstieg des Mähbalkens (12) entgegenwirken und aufgehoben sind, sobald der Mähbalken (12) dazu neigt, sich vom Boden abzuheben, wenn diese Widerstandskräfte versagen.

3. Mähwerk (10) nach Anspruch 1 oder 2, **dadurch gekennzeichnet, dass** der Zapfen (45) an einem Ende dieses zweiten Hydraulikzylinders (35) positioniert ist, welcher an seinem anderen Ende an dem beweglichen Rahmen (14) gehalten ist.

4. Mähwerk (10) nach einem oder mehreren der vorhergehenden Ansprüche 1 bis 3, **dadurch gekennzeichnet, dass** dieser bewegliche Rahmen (14) über einen Drehzapfen (15) an dem besagten festen Rahmen (13) gehalten ist, der im Gegenzug an der Rückseite des besagten Traktors gehalten ist.

5. Mähwerk (10) nach einem oder mehreren der vorhergehenden Ansprüche 1 bis 4, **dadurch gekennzeichnet, dass** der besagte Entlastungszylinder (28) an einem Ende mittels eines Zapfens (33) mit dem beweglichen Rahmen (14) verbunden ist, während an dem anderen Ende ein Schaft (34) mittels eines Zapfens (16) mit einer weiteren Gabel (41) verbunden ist, die sich um den Zapfen (18) dreht, wobei diese weitere Gabel (41) in einem ihrer ausgesparten Sitze (40) den Zapfen (31) an dem Ende des Hubzylinders (27) des Mähbalkens (12) aufnimmt.

6. Mähwerk (10) nach einem oder mehreren der vorhergehenden Ansprüche 1 bis 5, **dadurch gekennzeichnet, dass** die besagte Auslösestange (17) mit dem besagten festen Rahmen (13) unter Zwischenschaltung des besagten ersten Hydraulikzylinders (25) verbunden ist.

7. Mähwerk (10) nach einem oder mehreren der vorhergehenden Ansprüche 1 bis 6, **dadurch gekennzeichnet, dass** ein Ende dieser Auslösestange (17) mit einem Kipphebel (23) verbunden ist, welcher in einem seiner Zwischenbereiche durch einen Zapfen (24) an dem festen Rahmen (13) und an seinem anderen, gegenüberliegenden Ende durch einen Zapfen (36) an diesem ersten Hydraulikzylinder (25) gehalten ist.

## Revendications

1. Faucheuse à disque rotative (10) pourvue d'une barre de fauche latérale (12) comprenant :
- un cadre fixe (13),
- un cadre mobile (14) et
- un dispositif d'allégement de la barre de fauche (12),
dans laquelle ladite barre de fauche (12) est positionnée sur un bras de support (19) s'articulant dans un goujon (18) par rapport au cadre mobile (14),
dans laquelle un vérin d'allégement (28) est positionné entre ledit bras de support (19) et ledit cadre mobile (14), ce qui maintient allégé ledit bras de support (19) de ladite barre de fauche (12),
ledit vérin (28) étant chargé en fonction d'une force prédéterminée,
une broche de libération (17) étant également positionnée entre ledit cadre fixe (13) et ledit cadre mobile (14) portant ladite barre de fauche (12), et respectivement un vérin de levage (27) entre ledit cadre fixe (13) et ledit bras de support (19),
dans laquelle un premier vérin hydraulique (25) est également prévu, positionné entre ledit cadre fixe (13) et ladite broche de libération (17),
et
un second vérin hydraulique (35), positionné entre ledit cadre mobile (14) et ledit bras de support (19) de ladite barre de fauche (12), dans laquelle lesdits premier et second vérins hydrauliques (25, 35) sont hydrauliquement reliés et actionnés par ladite broche de libération (17) qui intervient en présence d'une force de résistance sur la barre de fauche,
dans laquelle ledit vérin de levage (27) est contraint au niveau d'une première extrémité vers un goujon (31), traversant le bras de support (19), et au niveau de l'autre extrémité opposée vers un goujon (39) positionné de manière rotative par rapport audit cadre fixe (13),
**caractérisée en ce qu'**au moins une fourche (42) pouvant tourner autour dudit goujon (18) est également prévue, laquelle entre en prise avec ledit goujon (31) dudit vérin de levage (27) relié via un goujon (45) à une tige (44) dudit second vérin hydraulique (35), positionnée entre ledit cadre mobile (14) et ledit bras de support (19).

2. Faucheuse (10) selon la revendication 1, **caractérisée en ce que** lesdits premier et second vérins (25, 35) sont actionnés par des forces de résistance qui s'opposent à l'avancement de la barre de fauche (12) et sont annulées dès que la barre de fauche (12) tend à décoller du sol lorsque ces forces de résistance lâchent.

3. Faucheuse (10) selon la revendication 1 ou 2, **caractérisée en ce que** ledit goujon (45) est agencé au niveau d'une extrémité dudit second vérin hydraulique (35) qui, au niveau de son autre extrémité, est contraint vers ledit cadre mobile (14).

4. Faucheuse (10) selon une ou plusieurs des revendications précédentes 1 à 3, **caractérisée en ce que** ledit cadre mobile (14) est contraint par le biais d'un goujon de rotation (15) vers ledit cadre fixe (13), contraint à son tour vers l'arrière dudit tracteur.

5. Faucheuse (10) selon une ou plusieurs des revendications précédentes 1 à 4, **caractérisée en ce que** ledit vérin d'allégement (28) est relié au niveau d'une extrémité au cadre mobile (14) à l'aide d'un goujon (33) alors qu'au niveau de l'autre extrémité, une tige (34) est reliée à l'aide d'un goujon (16) à une autre fourche (41) tournant autour du goujon (18), dans laquelle ladite autre fourche (41) loge, dans un de ses sièges évidés (40), le goujon (31) au niveau de l'extrémité du vérin de levage (27) de la barre de fauche (12).

6. Faucheuse (10) selon une ou plusieurs des revendications précédentes 1 à 5, **caractérisée en ce que** ladite broche de libération (17) est reliée audit cadre fixe (13) avec l'interposition dudit premier vérin hydraulique (25).

7. Faucheuse (10) selon une ou plusieurs des revendications précédentes 1 à 6, **caractérisée en ce qu'**une extrémité de ladite broche de libération (17) est reliée à un culbuteur (23) qui, dans une de ses zones intermédiaires, est contraint par un goujon (24) vers le cadre fixe (13) et au niveau de son autre extrémité opposée par un goujon (36) vers ledit premier vérin hydraulique (25).
